# EUROPEAN PATENT APPLICATION

(11) **EP 3 591 363 A1**
(43) Date of publication of application: **08.01.2020**
(21) Application number: 19184345.7
(22) Date of filing: 04.07.2019
(51) Int. Cl.: G01L 3/10

(54) **PIEZO TORQUE TUBE STRAIN GAUGE WITH PIEZO GENERATOR**

(30) Priority: 05.07.2018 US 201816027755
(71) Applicant: Hamilton Sundstrand Corporation, Charlotte, NC 28217-4578 (US)
(72) Inventor: KLUGA, Jason Michael, Sycamore, IL Illinois 60178 (US); ANKEY, Darrell E., Dixon, IL Illinois 61021 (US)
(74) Representative: Dehns

(57) **Abstract**

A torque tube sensor to measure torque on a torque tube includes a sensor body including at least a first body section and a second body section and one or more strain gauges including a first strain gauge disposed in the first body section (152), the first strain gauge (202a) including a piezo-electric layer (502) that produces a voltage based on deflection of the layer (502). The sensor also includes a first transmitter (150) that includes a controller, a power generator and wireless transmitter, wherein the controller (102) receives the voltage produced by the piezo-electric layer (502).

## Description

### BACKGROUND

Exemplary embodiments pertain to the art of strain gauges and, in particular, to a strain gauge for a tube that can be used, for example to drive actuators in an aircraft.

Modern aircraft often use a variety of high lift leading and trailing edge devices to improve high angle of attack performance during various phases of flight, for example, takeoff and landing. One such device is a trailing edge flap. Current trailing edge flaps generally have a stowed position in which the flap forms a portion of a trailing edge of a wing, and one or more deployed positions in which the flap extends forward and down to increase the camber and/or plan form area of the wing. The stowed position is generally associated with low drag at low angles of attack and can be suitable for cruise and other low angle of attack operations. The extended position(s) is/are generally associated with improved air flow characteristics over the aircraft's wing at higher angles of attack.

In general, such devices can include a control unit that causes a main drive unit to produce rotation of a shaft or "torque tube". This rotation can then be converted to flap extension in known manners such as by use of a ball screw. In such systems, each flap typically includes two actuators, one for each side of the flap.

The speed and position of the torque tubes are measured but not the amount of axial/torsional force that is applied to drive the aircraft surfaces. The actuation system will react to over/under speeds and to surfaces being out of position, but not to an over torque scenario.

In some cases the control surface can get stuck or other problems may occur. Such problems will result in an increase/decrease of torque in the shaft. Being able to measure such changes could be useful in certain instances.

### BRIEF DESCRIPTION

Disclosed in one embodiment is a torque tube sensor to measure torque on a torque tube. The sensor includes: a sensor body including at least a first body section and a second body section; one or more strain gauges including a first strain gauge disposed in the first body section, the first strain gauge including a piezo-electric layer that produces a voltage based on deflection of the layer; and a first transmitter that includes a controller, a power generator and wireless transmitter, wherein the controller receives the voltage produced by the piezo-electric layer.

According to a sensor of any prior embodiment, the one or more strain gauges include a second strain gauge, a third strain gauge and a fourth strain gauge, wherein the second strain gauge, the third strain gauge and the fourth strain gauge are each disposed in the first body section and each include a piezo-electric layer that produces a voltage based on deflection of the layer.

According to a sensor of any prior embodiment, the first transmitter receives voltages produced by the piezo-electric layers of the second, third and fourth stain gauges.

According to a sensor of any prior embodiment, the first transmitter transmits one of radio frequency or infrared frequency signals.

According to a sensor of any prior embodiment, the first body section includes a first recess formed to receive a torque tab formed at a first location on a torque tube.

According to a sensor of any prior embodiment, wherein the second body section includes a second recess formed to receive a torque tab formed at a second location on the torque tube and wherein the first and second body sections are fastened together.

According to a sensor of any prior embodiment, the first transmitter includes a piezo-electric power source that provides power to the first controller.

According to a sensor of any prior embodiment, the piezo-electric power source includes a piezo-electric layer formed on a flexible substrate.

According to a sensor of any prior embodiment, wherein the one or more strain gauges include a fifth strain gauge, a sixth strain gauge, a seventh strain gauge and an eighth strain gauge, wherein the fifth strain gauge, the sixth strain gauge, the seventh strain gauge and the eighth strain gauge are each disposed in the second body section and each include a piezo-electric layer that produces a voltage based on deflection of the layer.

Also disclosed is method of measuring torque on a torque tube or shaft. The method includes: providing a sensor body including at least a first body section and a second body section; coupling the sensor body to the torque tube or shaft; disposing one or more strain gauges including a first strain gauge in the first body section, the first strain gauge including a piezo-electric layer that produces a voltage based on deflection of the layer; and wirelessly transmitting a signal related to the voltage produced by deflection of the piezo-electric of the first strain gauge layer with a first transmitter that includes a controller, a power generator and wireless transmitter, wherein the controller receives the voltage produced by the piezo-electric layer.

According to a method of any prior embodiment, the one or more strain gauges include a second strain gauge, a third strain gauge and a fourth strain gauge, wherein the second strain gauge, the third strain gauge and the fourth strain gauge are each disposed in the first body section and each include a piezo-electric layer that produces a voltage based on deflection of the layer.

According to a method of any prior embodiment, the first transmitter receives voltages produced by the piezo-electric layers of the second, third and fourth stain gauges.

According to a method of any prior embodiment, wirelessly transmitting includes transmitting the signal as one of a radio frequency signal or an infrared frequency signal.

According to a method of any prior embodiment, the first body section includes a first recess formed to receive a torque tab formed at a first location on a torque tube.

According to a method of any prior embodiment, the second body section includes a second recess formed to receive a torque tab formed at a second location on the torque tube and wherein the first and second body sections are fastened together.

According to a method of any prior embodiment, the method further includes generating power with a piezo-electric power source that provides power to the first controller.

According to a method of any prior embodiment, piezo-electric power source includes a piezo-electric layer formed on a flexible substrate.

### BRIEF DESCRIPTION OF THE DRAWINGS

The subject matter which is regarded as the present disclosure is particularly pointed out and distinctly claimed in the claims at the conclusion of the specification. The foregoing and other features, and advantages of the present disclosure are apparent from the following detailed description taken in conjunction with the accompanying drawings in which:
FIG. 1 is a perspective view of an aircraft that includes moveable control surfaces;
FIG. 2 is an overview of a system in which a torque sensor as described herein can be included;
FIG. 3 is an overhead view of torque sensor according to one embodiment;
FIG. 4 is a cross section of the sensor of FIG. 3 taken along line 4-4;
FIG. 5 is simplified schematic of one embodiment of a piezo-electric strain sensor connected to a transmitter; and
FIG. 6 is an example circuit that can be included in an embodiment of a transmitter that includes a piezo-electric power source.

### DETAILED DESCRIPTION

A detailed description of one or more embodiments of the disclosed apparatus and method are presented herein by way of exemplification and not limitation with reference to the Figures.

As discussed above, flight surfaces that handle large amounts of loads over large distances are subject to mechanical stress and strain. They are subject to jams and fractures of the material and eventual breakdown. In order to prevent this, strain gauges disclosed herein can be used on the tubes of such systems to measure the mechanical strain.

To prevent or reduce damage to the flight surfaces of the actuation systems, a strain gauge system is disclosed. The strain gauges are placed in a two part clamp that is affixed to the torque tube. As will be appreciated, the strain gauges can produce a signal that is indicative of a torque experienced by the torque tube and, as such, can be used to provide a torque measurement on the tube. In one embodiment, the strain gauges are formed of a piezo-electric film. The deflection of this film causes the production of a voltage. This voltage is, thus, an indication of the strain/torque on the tube.

As vibrational energy is readily available throughout the complete flight cycle it is a ready source of energy that can be used by the system disclosed herein. As such, the system can also include a power generator that includes piezo electric device that can, in one embodiment, have a potential power creation density of 1.16 x 10⁻⁴ W/cm³. In such an embodiment, a vibrational energy harvester uses a piezoelectric material distributed across an elastic arm. Vibrations cause the arm to fluctuate and induce stress into the piezoelectric material which, in turn, creates an electric voltage. That voltage can be used, for example, to drive a wireless transmitter to transmit the measured strain/torque off the clamp for use by, for example, an aircraft controller.

In one non-limiting embodiment, eight strain gauges are present in the clamp. Of course, more or less could be provided. In the example with eight strain gauges, half (four) of the strain gauges are in first part of the clamp and the other are in the other part. Each part of the clamp includes wireless transmitter. Each transmitter can include microcontroller that receives the voltages produced by the strain gauges (or a signal related to the produced voltages) and can cause the transmitter to wirelessly transmit information indicative of the received voltages. In one embodiment, the transmitter sends the received signal to another location (referred to as receiver herein) for further processing.

This approach to torque sensing requires no connection to external wiring since wireless communication (e.g., infrared (IR) or radio frequency (RF)) is used by the transmitter. This design also requires no external power because the power used is generated by a power generator that includes piezo electric device that creates power due to vibration of the system (e.g., aircraft). Implementation of the device simply requires attachment of a clamp to the drive line (torque tube) with the circuits embedded in the clamp.

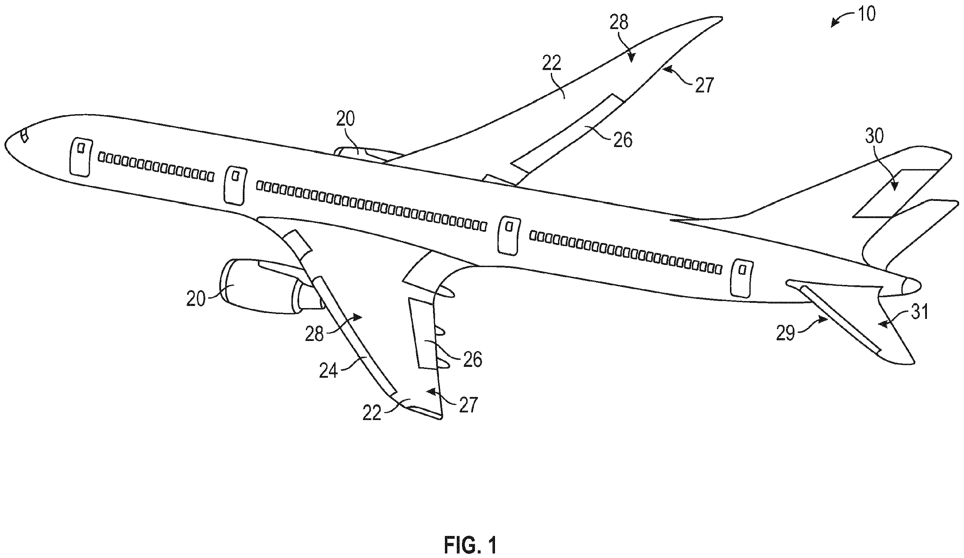

FIG. 1 illustrates an example of a commercial aircraft 10 having aircraft engines 20 that may embody aspects of the teachings of this disclosure. The aircraft 10 includes two wings 22 that each include one or more slats 24 and one or more flaps 26. The aircraft further includes ailerons 27, spoilers 28, horizontal stabilizer trim tabs 29, rudder 30 and horizontal stabilizer 31. The term "control surface" used herein includes but is not limited to either a slat or a flap or any of the above described.

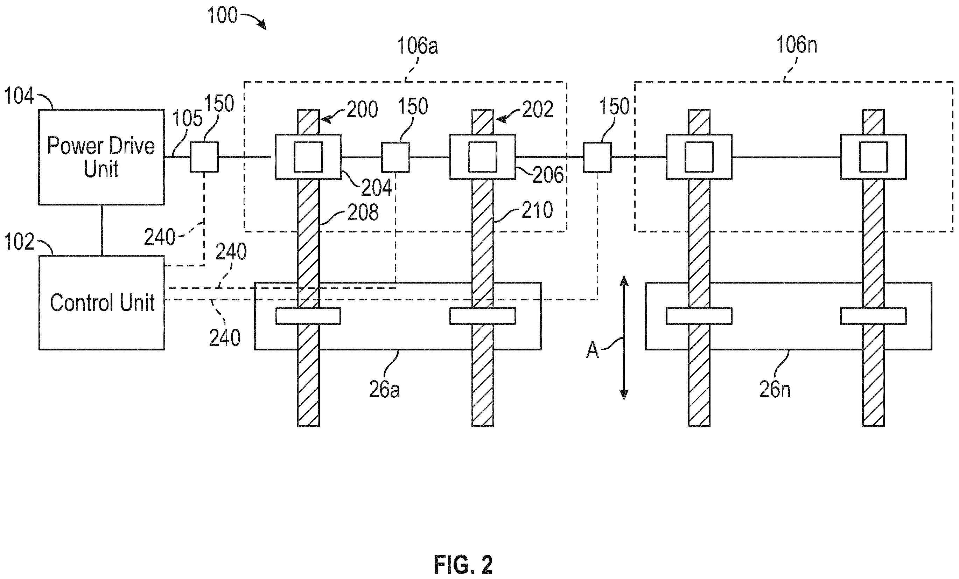

FIG. 2 illustrates, generally, a system 100 that can control and monitor the location of one or more control surfaces of an aircraft. As illustrated, the control surfaces are flaps 26. In particular, 2 flaps 26a, 26n are illustrated but any number of flaps could be controlled and monitored by the system 100. Further, while flaps 26 are illustrated, the same teachings herein can also be applied to slats 24 and the other control surfaces referred to above.

The system includes a power drive unit 104 (or drive unit for short). The drive unit 104 can cause a rotation of a drive shaft 105 in order to move one or more of the flaps 26 in either direction in or out as generally indicated by arrow A. To convert the rotary motion of the drive shaft 105 into linear motion to move the flaps 26a ... 26n, one or more actuator units 106a...106n are provided, with each flap or other control surface having its own actuator unit 106.

Each actuator unit 106 includes two actuators. For example, a first actuator unit 106a includes first and second actuators 200, 202. The first actuator 200 includes an actuator drive unit 204 and a linear translation element 208. The actuator drive unit 204 receives rotatory motion from the drive shaft 105 and causes the linear translation element 208 to move linearly in the direction shown generally by arrow A. Similarly, the second actuator 202 includes an actuator drive unit 206 and a linear translation element 210. The actuator drive unit 206 also receives rotatory motion from the drive shaft 105 and causes the linear translation element 210 to move linearly in the direction shown generally by arrow A. In one embodiment, the linear translation units 208, 210 are ball screws. In another, they may be hydraulic or rotary actuators or any other type of electromechanical actuators.

One or more torque sensors 150 are shown in FIG. 2 located in different locations on the shaft 105. The locations shown in FIG. 2 are by way of example only and can be varied.

Each of the sensors 150 can provide a wireless signal to a receiver. The received signal can be relayed either wirelessly or via a wire (or a combination thereof) to a control unit 102 via communication paths 240. The control unit 102 can be used to control operation of the power drive unit 104.

The controller 102 issues commands to cause the drive unit 104 to rotate shaft 105. The rotation causes linear motion of the linear translating elements 208, 210. The amount of torque on the shaft should be less than a predetermined amount in normal operating conditions. If the torque received from one of the sensors 150 exceeds this amount, the controller 102 can determine that an error exists and notify another control unit or act independently.

In either case, depending on the outputs of the sensors, skew and actuator malfunctions can be discovered, that are generally referred to as "error conditions" herein. These error conditions can be determined by comparisons to the sensor outputs and what is expected based on the instructions the control unit 102 provides to the drive unit 104. For instance, the control unit 102 can instruct the drive unit 104 to move the flaps to a fully extended position. If the torque difference between two of the sensors 150 is greater than expected, it could indicate that an actuator jam or other failure (e.g., skew) exists.

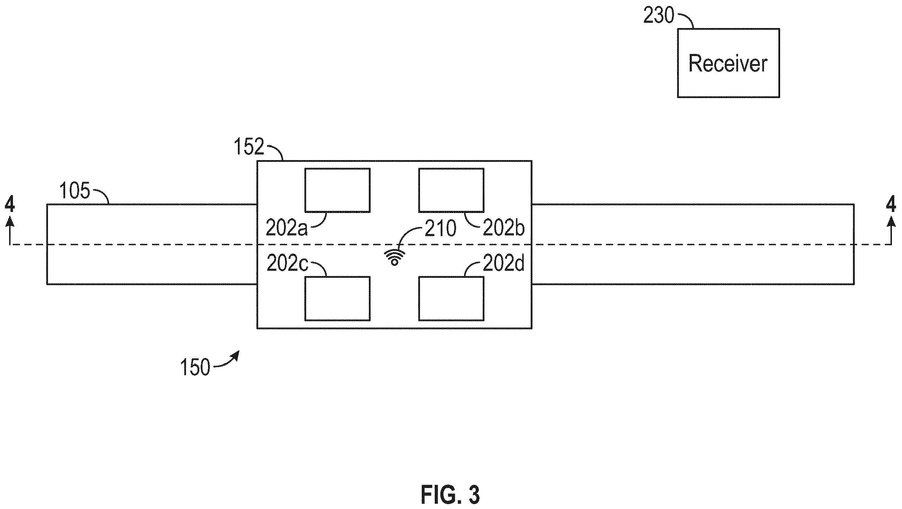

FIG. 3 shows a top view of a sensor 150 coupled to a shaft or torque tube 105. The sensor 150 is in the form of clamp that includes a sensor body that, as shown below includes at least first and body sections.

The sensor 150 includes one or more strain gauges 202a, 202b, 202c, 202d disposed in the body thereof. It will be understood that only one gauge is required (e.g., 202a) and the other gauges could be omitted.

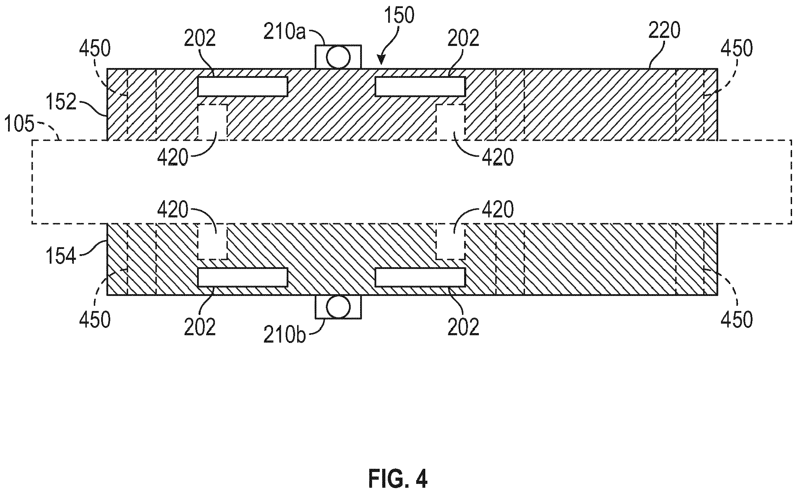

As described below by reference to FIG. 4, the body of the sensor/clamp 150 can include a first body section 152 and second body section 154. Each can include some or all of the components of the other section. For example, in FIG. 3 the first body portion 152 includes the strain gauges 202a, 202b, 202c, 202d. One or more additional strain gauges could be included in the second body portion 154.

Referring again to Fig. 3, the voltages produced by the strain gauges 202a, 202b, 202c, 202d will cause the transmitter 210 to generate a signal indicative of those signals. In one embodiment, the transmitter 210 can be either an IR or RF diode.

The signal generated by the transmitter 210 can be received by one or more receivers 230 located remotely therefrom. In this manner, a wireless signal can be provided to the controller 102 for processing. In one embodiment the processing can be performed according to at least one of the manners described above.

Each of the included strain gauges 202a, 202b, 202c and 202d can measure a strain in the body in which it is disposed. As illustrated, each gauge is included in the body but in one embodiment, the sensors can be directly attached to the tube.

Referring now to FIG. 4, the tube 105 includes one or more tabs 420 that extend outward from an outer diameter of the tube 105. The first portion 152 and the second portion 154 include recesses sized and configured to receive the tabs 420. The tabs can be of any shape and may also be referred to as pins.

In operation, fasteners (not shown) are inserted into fastener holes 450. This allows for the body portions 152, 154 to be coupled to the tube 105 in such a manner that as the tube 105 rotates, so do the body portions. The tabs 420 allow for torque experienced in the tube 105 to be transferred into the body portions 152, 154 to allow for the strain sensors therein to determine if a threshold torque value has been exceeded.

With further reference to FIG. 4, each portion 152, 154 is shown as including a transmitter 210a, 210b, respectively. The transmitter is operable to transmit when the strain sensors have values that indicate excessive torque in the tube 105. Each transmitter can include a controller that includes a piezo electric generator as more fully described below. Due to vibration, the generator creates electrical currents/voltages. These electrical currents/voltages can be used to power transmitter 210a, 210b.

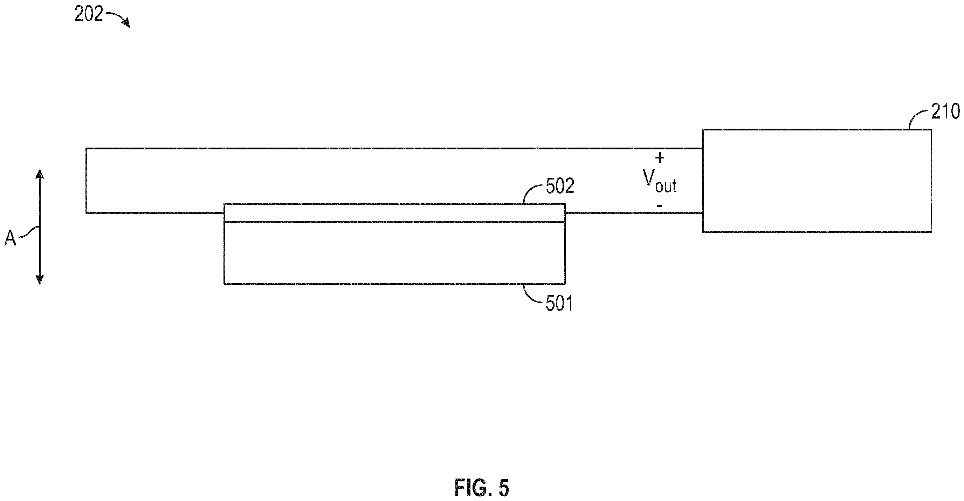

FIG. 5 shows a diagram of strain gauge 202 according to one embodiment. The strain gauge 202 as illustrated includes a piezo-electric layer 502 formed on a flexible substrate 504. The flexible substrate 504 can be mechanically attached to a body portion of the sensor/clamp 150 (not shown). Of course, the skilled artisan will be understood that the flexible substrate 504 can be omitted in one embodiment.

As the body portion of the sensor clamp 150 experiences torque due to its attachment to the tube 105 (through tabs 420, see FIG. 4) the piezo-electric layer 502 will deflect generally in the directions shown by arrow A. Of course, the orientation of the piezo-electric layer 502 could be changed and, as such, the directions of arrow A will also change accordingly.

Such a deflection will result in the generation of voltage Vout. The amplitude of this voltage will be proportional to the amount of deflection. The sign (positive or negative) will depend on which direction (e.g., up or down) the piezo-electric layer 502 has deflected. Vout is provided to a transmitter 210. This can be done for each strain gauge 202 in the sensor 150. If the amplitude (e.g., absolute value of Vout) is above a certain threshold, this can indicate a deflection (e.g., a torque) that exceeds a safe operating condition for the tube.

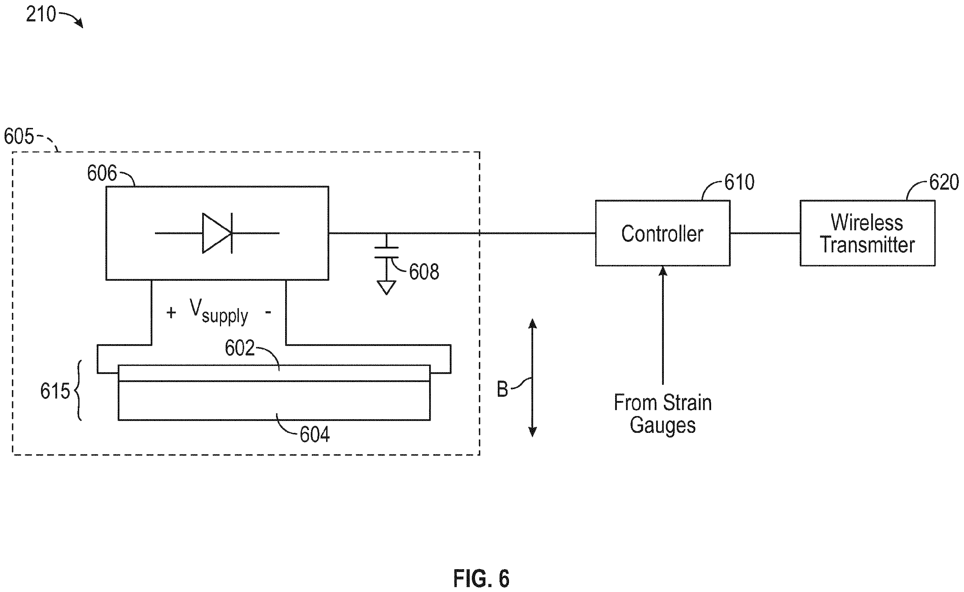

In FIG. 6 an example transmitter 210 according to one embodiment is illustrated. The transmitter 210 can be on the body portions 152, 154 as shown in FIGs. 3/4.

The transmitter 210 includes a piezo-electric power source 605. The source includes piezo-electric generator 615. The piezo electric generator 615 includes a piezo-electric layer 602 formed on a flexible substrate 604. The flexible substrate 604 can be mechanically attached to a body portion of the sensor/clamp 150 (not shown) in such a way that it deflects due to vibration of transmitted to it. Of course, the vibrations could come from any source on an aircraft.

As the body portion of the sensor clamp 150 vibrates during operation, the piezo-electric layer 602 will deflect generally in the directions shown by arrow B. Of course, the orientation of the piezo-electric layer 602 could be changed and, as such, the directions of arrow B will also change accordingly.

Such a deflection will result in the generation of voltage Vsupply. Depending on the configuration of the piezo-electric layer 602, Vsupply can be a time varying signal. The signal can either always be positive or can vary sinusoidally about a reference voltage. As such, the power source 605 can optionally include a power conditioner 606 that can be a diode rectifier in one embodiment. The power conditioner 606 can provide power to a power storage device such as capacitor 608. Of course, other types of power storage device could be used.

Regardless of how conditioned or stored, the power (e.g., voltage) produced by the piezo-electric generator 615 is provided to a controller 610. The controller 610 also receives the signals from the strain gauges. The controller 610 uses the power received to drive a wireless transmitter 620 such as an IR or RF diode, to transmit the information to, for example, receiver 230 of FIG. 3.

From the above it will be understood by the skilled artisan that a system has been provided to measure and transmit information related to torque experienced by a torque tube. The system does not need any external power supply to either measure or transmit the torque related information and, as such, reduces wiring required for such a system.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A torque tube sensor (150) to measure torque on a torque tube (105) comprising:
a sensor body including at least a first body section (152) and a second body section (154);
one or more strain gauges (202a-202d) including a first strain gauge (202a) disposed in the first body section (152), the first strain gauge (202a) including a piezo-electric layer (502) that produces a voltage based on deflection of the layer (502); and
a first transmitter (210) that includes a controller (102), a power generator and a wireless transmitter (210), wherein the controller (102) receives the voltage produced by the piezo-electric layer (502).

2. The torque tube sensor of claim 1, wherein the one or more strain gauges (202a-202d) include a second strain gauge (202b), a third strain gauge (202c) and a fourth strain gauge (202d), wherein the second strain gauge (202b), the third strain gauge (202c) and the fourth strain gauge (202d) are each disposed in the first body section (152) and each include a piezo-electric layer (502) that produces a voltage based on deflection of the layer (502).

3. The torque tube sensor of claim 2, wherein the controller (102) receives voltages produced by the piezo-electric layers (502) of the second (202b), third (202c) and fourth (202d) stain gauges.

4. The torque tube sensor of any preceding claim, wherein the first transmitter (210) transmits one of radio frequency or infrared frequency signals.

5. The torque tube sensor of any preceding claim, wherein the first body section (152) includes a first recess formed to receive a torque tab formed at a first location on a torque tube, and optionally
wherein the second body section (154) includes a second recess formed to receive a torque tab formed at a second location on the torque tube and wherein the first and second body sections (152, 154) are fastened together.

6. The torque tube sensor of any preceding claim, wherein the first transmitter (210) includes a piezo-electric power source that provides power to the first controller (102), and optionally
wherein the piezo-electric power source includes a piezo-electric layer formed on a flexible substrate.

7. The torque tube sensor of any preceding claim, wherein the one or more strain gauges (202a-202d) include a fifth strain gauge, a sixth strain gauge, a seventh strain gauge and an eighth strain gauge, wherein the fifth strain gauge, the sixth strain gauge, the seventh strain gauge and the eighth strain gauge are each disposed in the second body section and each include a piezo-electric layer (502) that produces a voltage based on deflection of the layer.

8. A method of measuring torque on a torque tube or shaft comprising:
providing a sensor body including at least a first body section (152) and a second body section (154);
coupling the sensor body to the torque tube or shaft (105);
disposing one or more strain gauges (202a-202d) including a first strain gauge (202a) in the first body section (152), the first strain gauge (202a) including a piezo-electric layer (502) that produces a voltage based on deflection of the layer; and
wirelessly transmitting a signal related to the voltage produced by deflection of the piezo-electric layer (502) of the first strain gauge (202a) with a first transmitter that includes a controller (102), a power generator and a wireless transmitter, wherein the controller receives the voltage produced by the piezo-electric layer.

9. The method of claim 8, wherein the one or more strain gauges (202a-202d) include a second strain gauge (202b), a third strain gauge (202c) and a fourth strain gauge (202d), wherein the second strain gauge (202b), the third strain gauge (202c) and the fourth strain gauge (202d) are each disposed in the first body section (152) and each include a piezo-electric layer (502) that produces a voltage based on deflection of the layer.

10. The method of claim 9, wherein the first transmitter (210) receives voltages produced by the piezo-electric layers of the second (202b), third (202c) and fourth (202d) strain gauges.

11. The method of claim 8, 9 or 10, wherein wirelessly transmitting includes transmitting the signal as one of a radio frequency signal or an infrared frequency signal.

12. The method of claim 8, 9 or 10, wherein the first body section (152) includes a first recess formed to receive a torque tab formed at a first location on a torque tube.

13. The method of claim 12, wherein the second body section (154) includes a second recess formed to receive a torque tab formed at a second location on the torque tube and wherein the first and second body sections (152, 154) are fastened together.

14. The method of any of claims 8 to 13, further comprising:
generating power with a piezo-electric power source that provides power to the first controller (102).

15. The method of claim 14, wherein piezo-electric power source includes a piezo-electric layer formed on a flexible substrate.
